(19) **Europäisches Patentamt / European Patent Office / Office européen des brevets**

(11) **EP 3 482 597 B1**

(12) **EUROPEAN PATENT SPECIFICATION**

(45) Date of publication and mention of the grant of the patent:
**01.09.2021 Bulletin 2021/35**

(51) Int Cl.:
*H04L 5/00* (2006.01)     *H04W 74/08* (2009.01)
*H04W 72/02* (2009.01)    *H04W 72/10* (2009.01)

(21) Application number: **16908392.0**

(86) International application number:
**PCT/CN2016/089622**

(22) Date of filing: **11.07.2016**

(87) International publication number:
**WO 2018/010060 (18.01.2018 Gazette 2018/03)**

(54) **METHOD FOR RADIO RESOURCE ACCESS AND TERMINAL DEVICE**

VERFAHREN FÜR FUNKRESSOURCENZUGANG UND ENDGERÄTEVORRICHTUNG

PROCÉDÉ D'ACCÈS AUX RESSOURCES RADIO, ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.05.2019 Bulletin 2019/20**

(73) Proprietor: **Telefonaktiebolaget LM Ericsson (publ)**
**164 83 Stockholm (SE)**

(72) Inventors:
• **LIU, Jinhua**
  **Beijing 100102 (CN)**
• **LI, Gen**
  **Beijing 100102 (CN)**
• **SHI, Cong**
  **Beijing 100102 (CN)**

(74) Representative: **Zacco Sweden AB**
**Valhallavägen 117**
**Box 5581**
**114 85 Stockholm (SE)**

(56) References cited:
WO-A1-2016/022849     CN-A- 101 651 906
CN-A- 103 200 695     CN-A- 103 763 784
US-A1- 2015 271 786     US-A1- 2016 080 920
US-B1- 8 355 713

## Description

### TECHNICAL FIELD

The present disclosure relates to radio communications, and more particularly, to a method for radio resource access and a terminal device.

### BACKGROUND

Contention-based uplink access, also known as Instant Uplink Access (IUA) in Long Term Evolution (LTE), is expected to be used in the future communication networks over both licensed and unlicensed spectrums.

In the contention- based uplink access, an uplink grant is transmitted to a terminal device, or User Equipment (UE), to configure a resource pool for contention-based access by the terminal device. More than one terminal device may be granted to transmit over the same resource pool. In this case, these terminal devices can contend for radio resources in the pool based on predefined rules.

Such contention-based uplink access can greatly reduce the uplink access latency and overhead, especially for small data transmissions. In the future communication networks, there will be a huge number of connections from various terminal devices including e.g., smart phones and Machine Type Communication (MTC) terminals. Each terminal device may occasionally generate a small amount of data but the overall capacity required for such small data transmissions may be enormous. The contention-based uplink access, with both reduced latency and improved capacity, is particularly advantageous for the small data transmissions.

However, in order to restrict a collision ratio among terminal devices contending for a set of radio resources to a low level, the contention based uplink access may have a low resource utilization ratio.

There is thus a need for an improved solution for radio resource access to enhance the resource utilization ratio in case of contention-based access.

The prior art document US 2016/080920 A1 describes a method for reducing contention in a D2D wireless communication system.

### SUMMARY

The invention is defined by the independent claims, whereas preferred embodiments are outlined in the dependent claims. It is an object of the present disclosure to provide a method for radio resource access and a terminal device, capable of achieving an improved resource utilization ratio while maintaining a low collision ratio.

In a first aspect, a method in a terminal device for radio resource access is provided in independent claim 1.

In a second aspect, a terminal device is provided in independent claim 10.

According to the present disclosure, terminal devices sharing one single resource pool can be divided into a number of groups each having an associated group priority. A terminal device belonging to a group having a lower group priority only accesses radio resources that do not conflict with any terminal device belonging to any terminal group having a higher group priority. In this way, any collision between two different terminal groups can be eliminated. Meanwhile, the radio resources in the pool can be utilized as much as possible by the terminal devices, which results in an improved resource utilization ratio.

### BRIEF DESCRIPTION OF THE DRAWINGS

The above and other objects, features and advantages will be more apparent from the following description of embodiments with reference to the figures, in which:

Fig. 1     is a flowchart illustrating a method for radio resource access according to an embodiment of the present disclosure;

Fig. 2     is a schematic diagram showing an example explaining the method shown in Fig. 1;

Fig. 3     is a block diagram of a terminal device according to an embodiment of the present disclosure; and

Fig. 4     is a block diagram of a terminal device according to another embodiment of the present disclosure.

### DETAILED DESCRIPTION

The embodiments of the disclosure will be detailed below with reference to the drawings. It should be noted that the following embodiments are illustrative only, rather than limiting the scope of the disclosure.

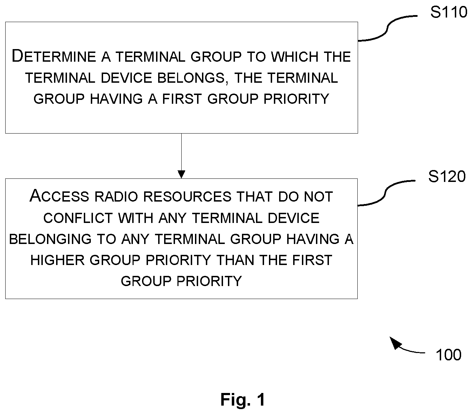

Fig. 1 is a flowchart illustrating a method 100 for radio resource access according to an embodiment of the present disclosure. The method 100 can be performed in a terminal device, e.g., a UE or a MTC terminal. The method 100 includes the following steps.

At step S110, the terminal device determines a terminal group to which the terminal device belongs. The terminal group has a first group priority.

In an example, the terminal group can be determined based on an identifier (ID) of the terminal device. For example, assuming that there are a predefined number, N, of terminal groups having indices of 1, 2, ..., N, respectively, the index, i, of the terminal group to which the terminal device belongs can be determined according to:

$$i = ID \bmod N \qquad\qquad (1).$$

Here, the ID can be e.g., Cell - Radio Network Temporary Identifier (C-RNTI) of the terminal device. In this case, no explicit signaling is required for the terminal device to determine the terminal group it belongs to. In an example, the group priorities of the respective terminal groups can be associated with the indices. For instance, a terminal group having a smaller index may have a higher group priority, or vice versa.

Alternatively, the terminal group can be determined based on a terminal grouping configuration received from a network node. For example, the index, i, of the terminal group to which the terminal device belongs can be received from an evolved NodeB (eNB) via terminal specific signaling (e.g., along with an uplink grant for contention-based access). Here, the terminal grouping configuration may be based on a number of terminal devices in each terminal group. For example, for the purpose of fairness, a terminal group having a lower priority may include a smaller number of terminal devices, such that all terminal groups can have similar collision ratio. Additionally or alternatively, the terminal grouping configuration may be based on a periodical traffic pattern associated with the terminal device. For example, the eNB may observe that many terminal devices have their traffic following a periodical pattern, which is typically the case for MTC terminals. Accordingly, the terminal grouping can be configured such that terminal devices probably having simultaneous traffic will not be assigned to the same terminal group. Additionally or alternatively, the terminal grouping configuration may be based on a Quality of Service (QoS) requirement associated with the terminal device. For example, terminal devices having higher QoS requirements (e.g., stricter delay requirements) can be assigned to a terminal group having a higher priority.

Alternatively, the terminal group can be determined randomly at the terminal device. For example, the terminal device can select an index, i, of the terminal group randomly from 1, 2, ..., N. Again in this case a terminal group having a smaller index may have a higher priority, or vice versa.

At step S120, the terminal device accesses radio resources that do not conflict with any terminal device belonging to any terminal group having a higher group priority than the first group priority.

When the first group priority is the highest group priority, in the step S120, the terminal device can select a resource block in a Transmission Time Interval (TTI) for accessing. Then, the terminal device can transmit an indicator in a search space associated with Group 1 in the selected resource block. The indicator indicates an occupied state of the selected resource block.

On the other hand, when the first group priority is not the highest group priority, in the step S120, the terminal device determines, for each terminal group having a higher group priority than the first group priority, whether a resource block in a Transmission Time Interval (TTI) is occupied by any terminal device belonging to that terminal group, by monitoring whether there is an indicator indicating an occupied state of the resource block in a search space associated with that terminal group.

Then, in an example, the terminal device selects a resource block in the TTI that is not occupied for accessing.

According to the invention, in addition to the occupied state, the indicator further indicates a multiplexing code associated with the resource block. In this case, according to the invention, the terminal device selects the resource block for accessing with another multiplexing code orthogonal to the multiplexing code. One example of the multiplexing code can be Demodulation Reference Signal (DMRS) shift.

Then, the terminal device can transmit an indicator in a search space associated with the terminal group in the selected resource block. The indicator indicates an occupied state of the selected resource block, and possibly the multiplexing code associated with the selected resource block. In an example, the indicator is transmitted only when the first group priority is not the lowest group priority.

In an example, the indicator can be transmitted using an indicator sequence from a set of indicator sequences assigned to a cell where the terminal device is camping and orthogonal to any indicator sequence assigned to any cell neighboring to the cell. In this way, the indicators transmitted in neighboring cells will not interfere with each other.

Alternatively, the indicator is transmitted using a resource pattern from a set of resource patterns assigned to a cell where the terminal device is camping and orthogonal to any resource pattern assigned to any cell neighboring to the cell. The term "resource pattern" as used herein refers to time-frequency positions of resource elements used for transmitting the indicator. In this way, the indicators transmitted in neighboring cells are disposed in different time-frequency positions and thus will not interfere with each other.

Additionally or alternatively, the indicator can be transmitted over resources configured to the terminal device via system information or terminal specific signaling.

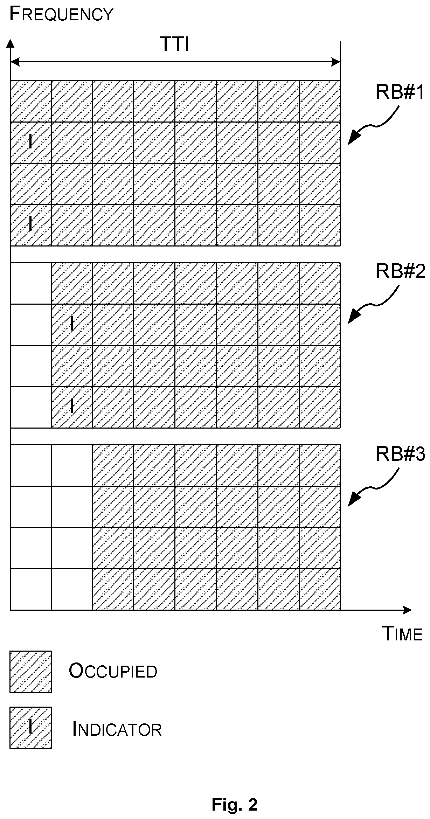

In the following, the above method 100 will be explained with reference to Fig. 2, which shows an exemplary resource occupation. For the purpose of illustration only, a resource pool including three resource blocks, RB#1, RB#2 and RB#3, is shown. Each resource block includes a number of resource elements each represented as squares. It is assumed here that there are N=3 terminal groups: Group 1, Group 2 and Group 3, with Group 1 having the highest group priority and Group 3 having the lowest group priority. It is also assumed here that there are three terminal devices, T1, T2 and T3, belonging to Group 1, Group 2 and Group 3, respectively.

The terminal device T1, which belongs to Group 1 having the highest group priority, selects RB#1 for accessing and transmits an indicator in a search space associated Group 1 in RB#1, indicating an occupied state of RB#1. In the example shown in Fig. 2, the search space includes two resource elements labeled as "I" in the first symbol in the TTI. The entire RB#1 is occupied by the terminal device T1.

The terminal device T2 belonging to Group 2 does not contend for radio resources from the first symbol. Instead, for each resource block in the resource pool, it monitors in the first symbol whether there is an indicator indicating an occupied state of the resource block in the search space associated Group 1. Here, the terminal device T2 detects the indicator transmitted by terminal device T1 in RB#1 and learns that RB#1 has been occupied by T1. Hence, the terminal device T2 selects a resource block that is not occupied (RB#2 in this example) for accessing. The terminal device T2 also transmits an indicator in a search space associated with Group 2 in RB#2, indicating an occupied state of RB#2. In the example shown in Fig. 2, the search space includes two resource elements labeled as "I" in the second symbol in the TTI. All resource elements in RB#2, other than those in the first symbol, are occupied by the terminal device T2.

It is to be noted here that, when orthogonal multiplexing codes are possible, the terminal device T2 can also select RB#1 for accessing, but with a different multiplexing code from the one used by the terminal device T1.

Similarly, for each resource block in the resource pool, the terminal device T3 belonging to Group 3 monitors in the first symbol whether there is an indicator indicating an occupied state of the resource block in the search space associated Group 1, and monitors in the second symbol whether there is an indicator indicating an occupied state of the resource block in the search space associated Group 2. Here, the terminal device T3 detects the indicator transmitted by terminal device T1 in RB#1 and the indicator transmitted by terminal device T2 in RB#2. Accordingly, it learns that RB#1 has been occupied by T1 and RB#2 has been occupied by T2. Hence, the terminal device T3 selects a resource block that is not occupied (RB#3 in this example) for accessing. All resource elements in RB#3, other than those in the first and second symbols, are occupied by the terminal device T3.

Again, when orthogonal multiplexing codes are possible, the terminal device T3 can also select RB#1 (or RB#2) for accessing, but with a different multiplexing code from the one used by the terminal device T1 (or T2).

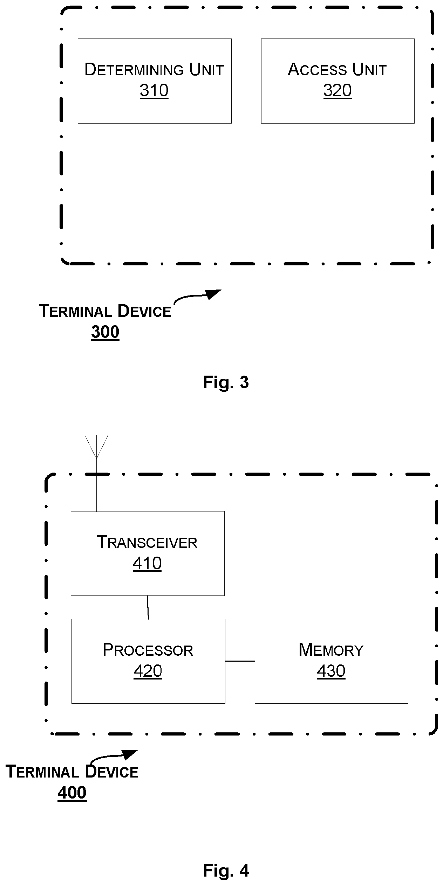

Correspondingly to the method 100 as described above, a terminal device is provided. Fig. 3 is a block diagram of a terminal device 300 for radio resource access according to an embodiment of the present disclosure. The terminal device 300 can be e.g., a UE or a MTC terminal.

As shown in Fig. 3, the terminal device 300 includes a determining unit 310 configured to determine a terminal group to which the terminal device belongs, the terminal group having a first group priority. The terminal device 300 further includes an access unit 320 configured to access radio resources that do not conflict with any terminal device belonging to any terminal group having a higher group priority than the first group priority.

In an embodiment, the access unit 320 is configured to, when the first group priority is the highest group priority: selecting a resource block in a Transmission Time Interval (TTI) for accessing. The terminal device 300 further includes a transmitting unit (not shown) configured to transmit an indicator in a search space associated with the terminal group in the selected resource block, the indicator indicating an occupied state of the selected resource block.

In an embodiment, the access unit 320 is configured to, when the first group priority is not the highest group priority: determine, for each terminal group having a higher group priority than the first group priority, whether a resource block in a Transmission Time Interval (TTI) is occupied by any terminal device belonging to that terminal group, by monitoring whether there is an indicator indicating an occupied state of the resource block in a search space associated with that terminal group.

In an embodiment, the access unit 320 is further configured to select a resource block in the TTI that is not occupied for accessing.

According to the invention, the indicator further indicates a multiplexing code associated with the resource block. The access unit 320 is further configured to select the resource block for accessing with another multiplexing code orthogonal to the multiplexing code.

In an embodiment, the terminal device 300 further includes a transmitting unit (not shown) configured to transmit an indicator in a search space associated with the terminal group in the selected resource block, the indicator indicating an occupied state of the selected resource block.

In an embodiment, the indicator is transmitted only when the first group priority is not the lowest group priority.

In an embodiment, the indicator is transmitted using an indicator sequence from a set of indicator sequences assigned to a cell where the terminal device is camping and orthogonal to any indicator sequence assigned to any cell neighboring to the cell.

In an embodiment, the indicator is transmitted using a resource pattern from a set of resource patterns assigned to a cell where the terminal device is camping and orthogonal to any resource pattern assigned to any cell neighboring to the cell.

In an embodiment, the indicator is transmitted over resources configured to the terminal device via system information or terminal specific signaling.

In an embodiment, the terminal group is determined based on an identifier (ID) of the terminal device.

In an embodiment, the terminal group is determined based on a terminal grouping configuration received from a network node.

In an embodiment, the terminal grouping configuration is based on at least one of: a number of terminal devices in each terminal group, a periodical traffic pattern associated with the terminal device, and a Quality of Service (QoS) requirement associated with the terminal device.

In an embodiment, the terminal group is determined randomly at the terminal device.

Each of the units 510-520 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 1.

Fig. 4 is a block diagram of a terminal device 400 according to another embodiment of the present disclosure.

The terminal device 400 can be provided for radio resource access. The terminal device 400 includes a transceiver 410, a processor 420 and a memory 430. The memory 430 contains instructions executable by the processor 420 whereby the terminal device 400 is operative to: receive from a terminal device a radio capability indication indicating one or more radio capabilities of the terminal device and one or more radio capabilities of radio access networks as detected by the terminal device; generate a traffic steering policy based on the radio capability indication; and transmit the traffic steering policy to the terminal device.

The present disclosure also provides at least one computer program product in the form of a non-volatile or volatile memory, e.g., an Electrically Erasable Programmable Read-Only Memory (EEPROM), a flash memory and a hard drive. The computer program product includes a computer program. The computer program includes: code/computer readable instructions, which when executed by the processor 420 causes the terminal device 400 to perform the actions, e.g., of the procedure described earlier in conjunction with Fig. 1.

The computer program product may be configured as a computer program code structured in computer program modules. The computer program modules could essentially perform the actions of the flow illustrated in Fig. 1.

The processor may be a single CPU (Central processing unit), but could also comprise two or more processing units. For example, the processor may include general purpose microprocessors; instruction set processors and/or related chips sets and/or special purpose microprocessors such as Application Specific Integrated Circuit (ASICs). The processor may also comprise board memory for caching purposes. The computer program may be carried by a computer program product connected to the processor. The computer program product may comprise a computer readable medium on which the computer program is stored. For example, the computer program product may be a flash memory, a Random-access memory (RAM), a Read-Only Memory (ROM), or an EEPROM, and the computer program modules described above could in alternative embodiments be distributed on different computer program products in the form of memories.

## Claims

**1.** A method (100), performed by a terminal device, for contention-based radio resource access, comprising:

- determining (S110) a terminal group to which the terminal device belongs, the terminal group having a first group priority;
- accessing (S120) radio resources that do not conflict with any terminal device belonging to any terminal group having a higher group priority than the first group priority, the method **characterized in that**, when the first group priority is not the highest group priority, said accessing comprises: determining, for each terminal group having a higher group priority than the first group priority, whether a resource block in a Transmission Time Interval, TTI, is occupied by any terminal device belonging to that terminal group, by monitoring whether there is an indicator indicating an occupied state of the resource block in a search space associated with that terminal group, wherein the indicator further indicates a multiplexing code associated with the resource block, and wherein said accessing (S120) further comprises: selecting the resource block for accessing with another multiplexing code orthogonal to the multiplexing code.

2. The method (100) of claim 1, wherein, when the first group priority is the highest group priority, said accessing (S120) comprises: selecting a resource block in a TTI for accessing, and wherein the method (100) further comprises:

- transmitting an indicator in a search space associated with the terminal group in the selected resource block, the indicator indicating the occupied state of the selected resource block.

3. The method (100) of claim 1, wherein said accessing (S120) further comprises: selecting a resource block in the TTI that is not occupied by any terminal device belonging to any terminal group having a higher group priority than the first group priority for accessing.

4. The method (100) of any of claims 1-3, further comprising:

- transmitting an indicator in a search space associated with the terminal group in the selected resource block, the indicator indicating an occupied state of the selected resource block.

5. The method (100) of claim 4, wherein the indicator is transmitted only when the first group priority is not the lowest group priority.

6. The method (100) of claim 2, 4 or 5, wherein

the indicator is transmitted using an indicator sequence from a set of indicator sequences assigned to a cell where the terminal device is camping and orthogonal to any indicator sequence assigned to any cell neighboring to the cell; or
the indicator is transmitted using a resource pattern from a set of resource patterns assigned to a cell where the terminal device is camping and orthogonal to any resource pattern assigned to any cell neighboring to the cell; or
the indicator is transmitted over resources configured to the terminal device via system information or terminal specific signaling.

7. The method (100) of any of claims 1-6, wherein the terminal group is determined based on an identifier, ID, of the terminal device or a terminal grouping configuration received from a network node.

8. The method (100) of claim 7, wherein the terminal grouping configuration is based on at least one of: a number of terminal devices in each terminal group, a periodical traffic pattern associated with the terminal device, and a Quality of Service, QoS, requirement associated with the terminal device.

9. The method (100) of any of claims 1-6, wherein the terminal group is determined randomly at the terminal device.

10. A terminal device (300), comprising:

- a determining unit (310) configured to determine a terminal group to which the terminal device belongs, the terminal group having a first group priority;
- an access unit (320) configured for contention-based access of radio resources that do not conflict with any terminal device belonging to any terminal group having a higher group priority than the first group priority, **characterized in that** the access unit (320) is further configured to, when the first group priority is not the highest group priority: determine, for each terminal group having a higher group priority than the first group priority, whether a resource block in a Transmission Time Interval, TTI, is occupied by any terminal device belonging to that terminal group, by monitoring whether there is an indicator indicating an occupied state of the resource block in a search space associated with that terminal group, wherein the indicator further indicates a multiplexing code associated with the resource block, and wherein said access unit (320) is further configured to select the resource block to access with another multiplexing code orthogonal to the multiplexing code.

11. The terminal device (300) of claim 10, wherein the access unit (320) is further configured to, when the first group priority is the highest group priority: select a resource block in a TTI for accessing, and wherein the terminal device (300) further comprises:

- a transmitting unit configured to transmit an indicator in a search space associated with the terminal group in the selected resource block, the indicator indicating the occupied state of the selected resource block.

12. The terminal device (300) of claim 10, wherein the access unit (320) is further configured to select a resource block in the TTI that is not occupied by any terminal device belonging to any terminal group having a higher group priority than the first group priority for accessing.

13. The terminal device (300) of claim 12, further comprising:

   - a transmitting unit configured to transmit an indicator in a search space associated with the terminal group in the selected resource block, the indicator indicating an occupied state of the selected resource block.

14. The terminal device (300) of claim 11 or 13, wherein

   the indicator is transmitted using an indicator sequence from a set of indicator sequences assigned to a cell where the terminal device is camping and orthogonal to any indicator sequence assigned to any cell neighboring to the cell; or
   the indicator is transmitted using a resource pattern from a set of resource patterns assigned to a cell where the terminal device is camping and orthogonal to any resource pattern assigned to any cell neighboring to the cell; or
   the indicator is transmitted over resources configured to the terminal device via system information or terminal specific signaling.

**Patentansprüche**

1. Verfahren (100), das von einem Endgerät durchgeführt wird, für konkurrenzbasierten Funkressourcenzugriff, umfassend:

   - Bestimmen (S110) einer Endgerätegruppe, zu der das Endgerät gehört, wobei die Endgerätegruppe eine erste Gruppenpriorität aufweist;
   - Zugreifen (S120) auf Funkressourcen, die nicht mit einem beliebigen Endgerät in Konflikt stehen, das zu einer Endgerätegruppe gehört, die eine höhere Gruppenpriorität als die erste Gruppenpriorität aufweist, wobei das Verfahren **dadurch gekennzeichnet ist, dass**, wenn die erste Gruppenpriorität nicht die höchste Gruppenpriorität ist, das Zugreifen umfasst: Bestimmen, für jede Endgerätegruppe, die eine höhere Gruppenpriorität als die erste Gruppenpriorität aufweist, ob ein Ressourcenblock in einem Übertragungszeitintervall (TTI) durch ein beliebiges Endgerät belegt ist, das zu dieser Endgerätegruppe gehört, indem überwacht wird, ob es einen Indikator gibt, der einen belegten Zustand des Ressourcenblocks in einem Suchraum anzeigt, der mit dieser Endgerätegruppe assoziiert ist, wobei der Indikator ferner einen Multiplexing-Code anzeigt, der mit dem Ressourcenblock assoziiert ist, und wobei das Zugreifen (S120) ferner umfasst: Auswählen des Ressourcenblocks für das Zugreifen mit einem anderen Multiplexing-Code orthogonal zu dem Multiplexing-Code.

2. Verfahren (100) nach Anspruch 1, wobei,
   wenn die erste Gruppenpriorität die höchste Gruppenpriorität ist, das Zugreifen (S120) umfasst: Auswählen eines Ressourcenblocks in einem TTI zum Zugreifen, und
   wobei das Verfahren (100) ferner umfasst:

   - Übertragen eines Indikators in einem Suchraum, der mit der Endgerätegruppe in dem ausgewählten Ressourcenblock assoziiert ist, wobei der Indikator den Belegungszustand des ausgewählten Ressourcenblocks anzeigt.

3. Verfahren (100) nach Anspruch 1, wobei das Zugreifen (S120) ferner umfasst: Auswählen eines Ressourcenblocks in dem TTI, der von keinem Endgerät belegt ist, das zu einer beliebigen Endgerätegruppe gehört, die für das Zugreifen eine höhere Gruppenpriorität als die erste Gruppenpriorität aufweist.

4. Verfahren (100) nach einem der Ansprüche 1-3, das ferner umfasst:

   - Übertragen eines Indikators in einem Suchraum, der mit der Endgerätegruppe in dem ausgewählten Ressourcenblock assoziiert ist, wobei der Indikator einen belegten Zustand des ausgewählten Ressourcenblocks anzeigt.

5. Verfahren (100) nach Anspruch 4, wobei der Indikator nur übertragen wird, wenn die erste Gruppenpriorität nicht die niedrigste Gruppenpriorität ist.

6. Verfahren (100) nach Anspruch 2, 4 oder 5, wobei der Indikator unter Verwendung einer Indikatorsequenz aus einem Satz von Indikatorsequenzen übertragen wird, die einer Zelle zugeordnet ist, in der sich das Endgerät befindet, und orthogonal zu einer beliebigen Indikatorsequenz ist, die einer beliebigen zu der Zelle benachbarten Zelle zugeordnet ist; oder der Indikator unter Verwendung eines Ressourcenmusters aus einem Satz von Ressourcenmustern übertragen wird, das einer Zelle zugeordnet ist, in der sich das Endgerät befindet, und orthogonal zu einem beliebigen Ressourcenmuster, das einer beliebigen zu der Zelle benachbarten Zelle zugeordnet ist; oder der Indikator über Ressourcen übertragen wird, die für das Endgerät über Systeminformationen oder endgerätespezifische Signalisierung konfiguriert sind.

7. Verfahren (100) nach einem der Ansprüche 1-6, wobei die Endgerätegruppe basierend auf einer Kennung (ID) des Endgeräts oder einer Endgerätegruppierungskonfiguration bestimmt wird, die von einem Netzwerkknoten empfangen wird.

8. Verfahren (100) nach Anspruch 7, wobei die Endgerätegruppierungskonfiguration auf wenigstens einer/einem basiert von:
einer Anzahl von Endgeräten in jeder Endgerätegruppe, einem periodischen Verkehrsmuster, das mit dem Endgerät assoziiert ist, und einer Anforderung für die Dienstgüte (QoS), die mit dem Endgerät assoziiert ist.

9. Verfahren (100) nach einem der Ansprüche 1-6, wobei die Endgerätegruppe zufällig an dem Endgerät bestimmt wird.

10. Endgerät (300), umfassend:

- eine Bestimmungseinheit (310), die konfiguriert ist, um eine Endgerätegruppe zu bestimmen, zu der das Endgerät gehört, wobei die Endgerätegruppe eine erste Gruppenpriorität aufweist;
- eine Zugriffseinheit (320), die für einen konkurrenzbasierten Zugriff auf Funkressourcen konfiguriert ist, die nicht mit einem Endgerät in Konflikt stehen, das zu einer Endgerätegruppe gehört, die eine höhere Gruppenpriorität als die Endgerätegruppe aufweist, **dadurch gekennzeichnet, dass** die Zugriffseinheit (320) ferner, wenn die erste Gruppenpriorität nicht die höchste Gruppenpriorität ist, konfiguriert ist, zum: Bestimmen, für jede Endgerätegruppe, die eine höhere Gruppenpriorität als die erste Gruppenpriorität aufweist, ob ein Ressourcenblock in einem Übertragungszeitintervall (TTI) durch ein beliebiges Endgerät belegt ist, das zu dieser Endgerätegruppe gehört, indem überwacht wird, ob es einen Indikator gibt, der einen belegten Zustand des Ressourcenblocks in einem Suchraum anzeigt, der mit dieser Endgerätegruppe assoziiert ist, wobei der Indikator ferner einen Multiplexing-Code anzeigt, der mit dem Ressourcenblock assoziiert ist, und wobei die Zugriffseinheit (320) ferner konfiguriert ist, um den Ressourcenblock für das Zugreifen mit einem anderen Multiplexing-Code orthogonal zu dem Multiplexing-Code auszuwählen.

11. Endgerät (300) nach Anspruch 10, wobei die Zugriffseinheit (320) ferner konfiguriert ist, wenn die erste Gruppenpriorität die höchste Gruppenpriorität ist, zum: Auswählen eines Ressourcenblocks in einem TTI zum Zugreifen, und wobei das Endgerät (300) ferner umfasst:

- eine Übertragungseinheit, die konfiguriert ist, um einen Indikator in einem Suchraum, der mit der Endgerätegruppe in dem ausgewählten Ressourcenblock assoziiert ist, auszuwählen, wobei der Indikator den Belegungszustand des ausgewählten Ressourcenblocks anzeigt.

12. Endgerät (300) nach Anspruch 10, wobei die Zugriffseinheit (320) ferner konfiguriert ist, um einen Ressourcenblock in dem TTI für das Zugreifen auszuwählen, der von keinem Endgerät belegt ist, das zu einer beliebigen Endgerätegruppe mit einer höheren Gruppenpriorität als der ersten Gruppenpriorität gehört.

13. Endgerät (300) nach Anspruch 12, das ferner umfasst:

- eine Übertragungseinheit, die konfiguriert ist, einen Indikator in einem Suchraum zu übertragen, der mit der Endgerätegruppe in dem ausgewählten Ressourcenblock assoziiert ist, wobei der Indikator einen Belegungszustand des ausgewählten Ressourcenblocks anzeigt.

**14.** Endgerät (300) nach Anspruch 11 oder 13, wobei der Indikator unter Verwendung einer Indikatorsequenz aus einem Satz von Indikatorsequenzen übertragen wird, die einer Zelle zugeordnet ist, in der sich das Endgerät befindet, und orthogonal zu einer beliebigen Indikatorsequenz ist, die einer beliebigen zu der Zelle benachbarten Zelle zugeordnet ist; oder der Indikator unter Verwendung eines Ressourcenmusters aus einem Satz von Ressourcenmustern übertragen, das einer Zelle zugeordnet ist, in der sich das Endgerät befindet, und orthogonal zu einem beliebigen Ressourcenmuster, das einer beliebigen zu der Zelle benachbarten Zelle zugeordnet ist; oder der Indikator über Ressourcen übertragen wird, die für das Endgerät über Systeminformationen oder endgerätespezifische Signalisierung konfiguriert sind.

**Revendications**

**1.** Procédé (100) réalisé par un dispositif terminal pour un accès à des ressources radio basé sur la contention, comprenant :

  - la détermination (S110) d'un groupe de terminaux auquel appartient le dispositif terminal, le groupe de terminaux ayant une première priorité de groupe ;
  - l'accès (S120) à des ressources radio qui n'entrent en conflit avec aucun dispositif terminal appartenant à un quelconque groupe de terminaux ayant une priorité de groupe plus élevée que la première priorité de groupe, le procédé étant **caractérisé en ce que**, lorsque la première priorité de groupe n'est la priorité de groupe la plus élevée, ledit accès comprend : la détermination, pour chaque groupe de terminaux ayant une priorité de groupe plus élevée que la première priorité de groupe, du fait qu'un bloc de ressources dans un intervalle de temps de transmission, TTI, est occupé ou non par un quelconque dispositif terminal appartenant à ce groupe de terminaux, par surveillance du fait qu'il existe ou non un indicateur indiquant un état occupé du bloc de ressources dans un espace de recherche associé à ce groupe de terminaux, dans lequel l'indicateur indique en outre un code de multiplexage associé au bloc de ressources, et dans lequel ledit accès (S120) comprend en outre : la sélection du bloc ressources pour un accès avec un autre code de multiplexage orthogonal au code de multiplexage.

**2.** Procédé (100) selon la revendication 1, dans lequel, lorsque la première priorité de groupe est la priorité de groupe la plus élevée, ledit accès (S120) comprend : la sélection d'un bloc de ressources dans un TTI pour un accès, et dans lequel le procédé (100) comprend en outre :

  - la transmission d'un indicateur dans un espace de recherche associé au groupe de terminaux dans le bloc de ressources sélectionné, l'indicateur indiquant l'état occupé du bloc de ressources sélectionné.

**3.** Procédé (100) selon la revendication 1, dans lequel le dit accès (S120) comprend en outre : la sélection d'un bloc de ressources dans le TTI qui n'est pas occupé par un quelconque dispositif terminal appartenant à un quelconque groupe de terminaux ayant une priorité de groupe plus élevée que la première priorité de groupe pour un accès.

**4.** Procédé (100) selon l'une quelconque des revendications 1 à 3, comprenant en outre :

  - la transmission d'un indicateur dans un espace de recherche associé au groupe de terminaux dans le bloc de ressources sélectionné, l'indicateur indiquant un état occupé du bloc de ressources sélectionné.

**5.** Procédé (100) selon la revendication 4, dans lequel l'indicateur est transmis uniquement lorsque la première priorité de groupe n'est pas la priorité de groupe la plus basse.

**6.** Procédé (100) selon la revendication 2, 4 ou 5, dans lequel
l'indicateur est transmis à l'aide d'une séquence d'indicateur provenant d'un ensemble de séquences d'indicateur attribuée à une cellule où est localisé le dispositif terminal et orthogonale à une séquence d'indicateur attribuée à une quelconque cellule voisine de la cellule ; ou
l'indicateur est transmis à l'aide d'un modèle de ressources provenant d'un ensemble de modèles de ressources attribué à une cellule où est localisé le dispositif terminal et orthogonal à un quelconque modèle de ressources attribué à une quelconque cellule voisine de la cellule ; ou
l'indicateur est transmis sur des ressources configurées pour le dispositif terminal via des informations système ou une signalisation spécifique au terminal.

**7.** Procédé (100) selon l'une quelconque des revendications 1 à 6, dans lequel le groupe de terminaux est déterminé sur la base d'un identifiant, ID, du dispositif terminal ou d'une configuration de regroupement de terminaux reçue depuis un nœud de réseau.

**8.** Procédé (100) selon la revendication 7, dans lequel la configuration de regroupement de terminaux est basée sur au moins l'un parmi : un nombre de dispositifs terminaux dans chaque groupe de terminaux, un modèle de trafic périodique associé au dispositif terminal, et une exigence de qualité de service, QoS, associée au dispositif terminal.

**9.** Procédé (100) selon l'une quelconque des revendications 1 à 6, dans lequel le groupe de terminaux est déterminé de manière aléatoire au niveau du dispositif terminal.

**10.** Dispositif terminal (300), comprenant :

- une unité de détermination (310) configurée pour déterminer un groupe de terminaux auquel appartient le dispositif terminal, le groupe de terminaux ayant une première priorité de groupe ;
- une unité d'accès (320) configurée pour un accès basé sur la contention à des ressources radio qui n'entrent en conflit avec aucun dispositif terminal appartenant à un quelconque groupe de terminaux ayant une priorité de groupe plus élevée que la première priorité de groupe, **caractérisé en ce que**, l'unité d'accès (320) est en outre configurée pour, lorsque la première priorité de groupe n'est la priorité de groupe la plus élevée, déterminer, pour chaque groupe de terminaux ayant une priorité de groupe plus élevée que la première priorité de groupe, si un bloc de ressources dans un intervalle de temps de transmission, TTI, est occupé par un quelconque dispositif terminal appartenant à ce groupe de terminaux, par surveillance du fait qu'il existe ou non un indicateur indiquant un état occupé du bloc de ressources dans un espace de recherche associé à ce groupe de terminaux, dans lequel l'indicateur indique en outre un code de multiplexage associé au bloc de ressources, et dans lequel ladite unité d'accès (320) en en outre configurée pour sélectionner le bloc ressources pour un accès avec un autre code de multiplexage orthogonal au code de multiplexage.

**11.** Dispositif terminal (300) selon la revendication 10, dans lequel l'unité d'accès (320) est en outre configurée pour, lorsque la première priorité de groupe est la priorité de groupe la plus élevée : sélectionner un bloc de ressources dans un TTI pour un accès, et
dans lequel le dispositif terminal (300) comprend en outre :

- une unité de transmission configurée pour transmettre un indicateur dans un espace de recherche associé au groupe de terminaux dans le bloc de ressources sélectionné, l'indicateur indiquant l'état occupé du bloc de ressources sélectionné.

**12.** Dispositif terminal (300) selon la revendication 10, dans lequel l'unité d'accès (320) est en outre configurée pour sélectionner un bloc de ressources dans le TTI qui n'est pas occupé par un quelconque dispositif terminal appartenant à un quelconque groupe de terminaux ayant une priorité de groupe plus élevée que la première priorité de groupe pour un accès.

**13.** Dispositif terminal (300) selon la revendication 12, comprenant en outre :

- une unité de transmission configurée pour transmettre un indicateur dans un espace de recherche associé au groupe de terminaux dans le bloc de ressources sélectionné, l'indicateur indiquant un état occupé du bloc de ressources sélectionné.

**14.** Dispositif terminal (300) selon la revendication 11 ou 13, dans lequel

l'indicateur est transmis à l'aide d'une séquence d'indicateur provenant d'un ensemble de séquences d'indicateur attribuée à une cellule où est localisé le dispositif terminal et orthogonale à une séquence d'indicateur attribuée à une quelconque cellule voisine de la cellule ; ou
l'indicateur est transmis à l'aide d'un modèle de ressources provenant d'un ensemble de modèles de ressources attribué à une cellule où est localisé le dispositif terminal et orthogonal à un quelconque modèle de ressources attribué à une quelconque cellule voisine de la cellule ; ou
l'indicateur est transmis sur des ressources configurées pour le dispositif terminal via des informations système ou une signalisation spécifique au terminal.

S110

DETERMINE A TERMINAL GROUP TO WHICH THE
TERMINAL DEVICE BELONGS, THE TERMINAL
GROUP HAVING A FIRST GROUP PRIORITY

S120

ACCESS RADIO RESOURCES THAT DO NOT
CONFLICT WITH ANY TERMINAL DEVICE
BELONGING TO ANY TERMINAL GROUP HAVING A
HIGHER GROUP PRIORITY THAN THE FIRST
GROUP PRIORITY

100

**Fig. 1**

**Fig. 2**

DETERMINING UNIT
310

ACCESS UNIT
320

TERMINAL DEVICE
300

**Fig. 3**

TRANSCEIVER
410

PROCESSOR
420

MEMORY
430

TERMINAL DEVICE
400

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016080920 A1